# EUROPEAN PATENT APPLICATION

(11) **EP 2 759 339 A1**
(43) Date of publication of application: **30.07.2014**
(21) Application number: 13152430.8
(22) Date of filing: 23.01.2013
(51) Int. Cl.: B01J 19/00

(54) **Reactor device**

(71) Applicant: ILS-Integrated Lab Solutions GmbH, 10997 Berlin (DE)
(72) Inventor: Nagy, Anton John, 10999 Berlin (DE); Cowan, Robert, 13189 Berlin (DE)
(74) Representative: Schulz Junghans Patentanwälte PartGmbB

(57) **Abstract**

The invention relates to a reactor device (1), comprising: at least one vessel (100) having a first end section (101) and an opposing second end section (102), wherein the two end sections (101, 102) each delimit an opening (O, O') of the at least one vessel (100), so that a fluid medium (F) can enter the at least one vessel (100) through one of the openings (O), flow through the at least one vessel (100), and leave the at least one vessel (100) through the other opening (O'), and a first manifold (200) comprising a first recess (201) and a first aperture (202), wherein the first end section (101) of the at least one vessel (100) is designed to be arranged in said first recess (201) in an operating position of the first manifold (200), so that the opening (O) delimited by the first end section (101) of the vessel (100) is in fluid communication with said first aperture (202) and fluid medium (F) can be discharged into the vessel (100) or can be drawn off the vessel (100) through said first aperture (202) of the first manifold (200). According to the invention, the reactor device (1) comprises a first seal (10) for sealing a gap between the first end section (101) of the at least one vessel (100) and a circumferential inner side (201 a) of the first recess (201) in the operating position of the first manifold (200), wherein the first seal (10) encompasses the first end section (101) of the at least one vessel (100) and rests with an outer side (10a) against said inner side (201 a) of the first recess (201) of the first manifold (200).

## Description

### Specification

The invention relates to a reactor device according to claim 1 and to a method according to claim 14.

Such a reactor device comprises at least one vessel having a first end section and an opposing second end section, wherein the two end sections each delimit an opening of the vessel, so that a fluid medium can enter the vessel through one of the openings, flow through the vessel, and leave the vessel through the other opening, and a first manifold comprising a first recess and a first aperture, wherein the first end section of the at least one vessel is designed to be arranged in said first recess in an operating position of the first manifold, so that said opening delimited by the first end section of the at least one vessel is in fluid communication with said first aperture and the fluid medium can be discharged into the vessel or can be drawn off the vessel through said first aperture of the first manifold. Said first aperture of the first manifold serves for feeding fluid medium into the at least one vessel or for drawing off said medium from the at least one vessel. Such a first aperture may be connected to a conduit that may be an integral part of first manifold or a separate part being designed to be connected to said first aperture in a releasable manner. Further, the first aperture may be formed in a separate part of the first manifold like a gas distributor that may be connected to a base plate of the manifold, in which base plate the first recess(es) may be formed at least partially (the first recess(es) may also extend into such a gas distributor for instance).

Various market-available systems suffer from a variety of disadvantages, particularly concerning the sealing of reactor components. For instance, cone closure systems are widely used. These consist of a tube ending in a conical shape that is pressed via a screw into a high-pressure fitting with a conical shape, which fits against the conical tube, providing a leak-free fluidic connection.

Further, frequently used ferrule-closure connections use a separate single- or double-ferrule system, which consists of a conical ring, which is pressed into the softer tube material, deforming the outer-circumference of the tube, resulting in a leak-free fluidic connection.

Such closures often suffer from the problem that they tend to leak after repeated opening and closing as well as the fact that they require tools for opening and closing as well as a high closing torque. All of the above make handling of such systems very labor-intensive and prone to error (e.g. overtightening).

Furthermore, so called O-ring closures are commonly used, but require a compressive force, to push down on the O-ring flange, deforming the O-ring and thus providing a fluidic seal between the surfaces. Consequently, such closures suffer from requiring that substantial force be used to deform and seal the O-ring sufficiently between the reactor vessel and lid. Such systems are for instance disclosed in EP 1 347 829 B1 and EP 2 263 790 A2.

Therefore, the problem underlying the present invention is to provide for a reactor device and a method which allow for an easy disassembly of the sealed connection between the at least one vessels and said first manifold without an excessive use of tools.

This problem is solved by a reactor device having the features of claim 1.

Preferred embodiments of the present invention are stated in the sub claims and are described below.

According to claim 1, the reactor device comprises a first seal, particularly an O-ring seal, for sealing a gap between the first end section of the at least one vessel and a circumferential inner side of the first recess in the operating position of the first manifold, wherein the first seal encompasses the first end section of the at least one vessel and rests with an outer side against said inner side of the first recess of the first manifold.

Advantageously, such a first seal does particularly not require a high force to be used to seal the first seal against the fluidic sealing surfaces and hence can be sealed without the implementation of tools in a much shorter time than traditional compressed-o-ring-closure reactor systems.

According to an embodiment of the invention, the reactor device comprises a second manifold opposing the first manifold. Preferably, the second end section of the at least one vessel is connected to the second manifold via a sealing element which provides a direct seal effect between the second manifold and the second end section of the vessel, e.g. is arranged between the said at least one vessel and the second manifold. Such a sealing element can be any sealing, e.g. a welded seal or an O-ring seal, see below.

According to a further embodiment of the present invention, the second manifold comprises a second recess and a second aperture, wherein the second end section of the at least one vessel is designed to be arranged in said second recess in an operating position of the second manifold, so that said opening delimited by the second end section of the vessel is in fluid communication with said second aperture and the fluid medium can be discharged into the at least one vessel or can be drawn off the at least one vessel through said second aperture of the second manifold. Preferably, the reactor device comprises a second seal (e.g. O-ring seal) for sealing a gap between the second end section and a circumferential inner side of the second recess in the operating position of the second manifold, wherein the second seal encompasses the second end section of the at least one vessel and rests with an outer side against said inner side of the second recess of the second manifold.

Preferably, the reactor device comprises a plurality of the afore-described first and second seals as well as associated first and second recesses for sealing a corresponding plurality of vessels. Also, the following features of the invention can be implemented for a single vessel as well as for a plurality of vessels.

With respect to a state in which the reactor device according to the invention is positioned as intended, the first manifold may be an upper manifold while the second manifold may be a lower manifold with respect to the vertical. Accordingly, the first seals may be upper seals and the second seals may be lower seals. Likewise, the first recesses may be upper recesses and the second recesses may be lower recesses.

Preferably, the manifolds extend - with respect to the afore-mentioned position - along horizontal extension planes or in a circular pattern, while the vessel(s) preferably extend along a longitudinal axis that runs along the vertical or perpendicular to said extension planes.

Further, the manifolds are preferably spaced apart along said longitudinal axis, i.e., each vessel protrudes out of its associated first and second recess.

Preferably, the vessels are tubular having a circular cross section.

According to a further embodiment of the present invention, the first manifold is designed to be movable from its operating position into a service position in which the first end section of each vessel is arranged outside the respective first recess so that the individual vessel can be exchanged. Since the vessels can be easily exchanged in this way, they may be single use. Preferably, the other (second) manifold remains stationary and may be fixed in place by bolts, screws or other fastening means. Of course also the second manifold may be movable. Then, the first manifold is preferably arrested.

According to a simple embodiment of the invention a seal effect of the first/second seals is generated when the pressure in the reactor device is sufficiently low that the force acting on the movable manifold downward is larger than the force acting upward on the manifold created by the fluid contents of the vessels. Particularly, without active force on the top (e.g. first) manifold the whole system only seals at relatively low pressures, roughly 1 bar (g).

For handling higher pressures, the reactor device preferably comprises a coupling means via which the two manifolds are coupled to each other in order to keep their distance (e.g. along the longitudinal axes of the vessels) constant, so that the vessels are not pulled out of the manifolds under pressure. Alternatively, the manifolds can also be fixed to separate means for achieving said constant distance.

For moving the first (or second) manifold, the reactor device preferably comprises a movement generating means which is designed to move the first (or second) manifold from the respective operating position to the respective service position and vice versa. Preferably, the movement generating means is designed to move the first (or second) manifold pneumatically. Alternatively said movement generating means may be formed by a motor. Alternatively, the first (or second) manifold may be designed to be moved manually.

Further, the reactor device preferably comprises a guiding means (especially when being moved manually) which is designed to guide a movement of the first or the second manifold from the respective operating position to the respective service position and vice versa. The guiding means may comprise at least one guiding rail, wherein the first (or second) manifold is designed to slide along said at least one guiding rail when being moved back and forth between said operating and service position.

According to yet another embodiment of the present invention, each first and/or second seal is preferably designed out of an elastomeric material, particularly such that they seal automatically, particularly when exposed to a pressure gradient. According to a further embodiment each first and/or second recess comprises a circumferential step on which the respective first seal rests.

According to a further embodiment a first support ring is provided for each first seal, wherein the first support rings each butt against a side of the respective first seal facing away from the circumferential step of the respective first recess. Particularly, each first support ring comprises a circumferential flange resting on a further circumferential step of the respective first recess. Analogously, a second support ring may be provided for the second seals.

For holding the first or second seals in place, associated first or second clamping elements are preferably provided (e.g. in the form of a first/second C-ring). Preferably, the clamping elements are designed to engage with an associated circumferential groove of the respective first or second recess.

According to a further embodiment of the present invention, each first and/or second recess may comprise a circumferential groove for housing the associated first and/or second seal.

According to yet another embodiment of the present invention, each first recess of the first manifold is formed at least partially (or completely) in a separate first assembly (i.e. the first seals are each part of separate first assemblies), which may comprise a first sleeve in which at least a part (or the whole) of the respective first recess is formed. Particularly, such a first assembly is inserted into a first base plate of the first manifold in a releasable manner. Thus, individual first and second seals can be easily replaced or serviced.

Further, the reactor device preferably comprises a first fixing means being fastened to the first base plate so as to prevent the first assemblies (or first sleeves) from being pulled out of the first base plate, particularly when the second manifold is removed from the vessels. The first fixing means may comprise two semi-annular rings for keeping the first sleeves in place.

Analogously, releasable second assemblies may be provided that are inserted into a second base plate of the second manifold, each second assembly comprising at least a part (or the whole) of one of the second recesses for receiving the second seals (i.e. the second seals are each part of separate second assemblies). The second assemblies may also comprise second sleeves in which the second recesses are formed at least partially (or completely). Further, a second fixing means may be provided, e.g. comprising two semi-annular rings, for keeping the second assemblies (or second sleeves) in place with respect to the second base plate (see above).

In a further embodiment of the invention, the first and the second manifolds are connected to each other by tension rods, wherein particularly the first base plate comprises a first plate and a second plate running parallel with respect to each other and being connected to each other, particularly by a plurality of stress bolts, wherein particularly the tension rods connecting to the first base plate are connected to the second plate, while the first sleeves are inserted into the first plate.

Particularly, the two manifolds are connected to each other via a first and a second carrier plate running parallel with respect to each other and being designed to support a heating device for heating the vessels.

Preferably, the first (e.g. upper) manifold is connected to the first (e.g. upper) carrier plate by means of a plurality of first tension rods extending parallel to the longitudinal axes of the vessels. Further, the first carrier plate is preferably connected to the second (e.g. lower) carrier plate via a plurality of second tension rods extending parallel to the longitudinal axes of the vessels. Finally, the second carrier plate is preferably connected to the second (e.g. lower) manifold via a plurality of third tension rods.

According to a further embodiment of the present invention, the vessels each contain a substance, particularly comprising a catalyst or formed by a catalyst. Here, the vessels may contain the same substance or different substances (e.g. catalysts).

Thus, a reactor device according to the invention can be particularly used for process-optimization, catalyst testing and development including petrochemical, chemical, pharmaceutical and biological processes said involve said substances and fluid media. A typical example would be for testing the performance of a powdered heterogeneous catalyst mounted inside of the vessels.

The reactor device described here is particularly well suited to parallel- or high-throughput experimentation. In this case the vessels are preferably connected to a large number of feed and outlet conduits making possible the execution and analysis of a large number of experiments in parallel.

According to a further embodiment of the present invention, the vessels, first recesses and/or second recesses contain a filter, respectively, for filtering a fluid medium that is passed through the individual vessel.

According to yet another embodiment of the present invention, the reactor device is designed such that the first and/or second seals maintain their seal effect up to a pressure of 1 bar (g), preferably 10 bar (g), preferably 100 bar (g), preferably 1000 bar (g).

According to a further embodiment of the present invention, each vessel, particularly the respective first or second aperture of the (first or second) manifold through which the fluid medium (effluent) is drawn of the vessel, is connected to an analyzing system for analyzing the effluent from the respective vessel. The analyzing system may comprise of may be formed by a gas-chromatograph and/or a mass-spectrometer.

According to a further embodiment each vessel, particularly its associated first and/or second aperture of the first and/or second manifold, may be connected to a flow-measuring device being designed to measure a flow of a fluid medium (e.g. mass-and/or volume flow) into or through the respective vessel.

According to a further embodiment of the present invention the reactor device comprises a temperature sensing device being designed to sense the temperature inside each vessel.

According to a further embodiment, the reactor device comprises a heating device for heating the vessels.

Further, the reactor device may comprise an isolation surrounding the vessels for thermal isolation of the vessels.

Furthermore, the problem underlying the present invention is solved by a method having the features of claim 14.

According thereto, the method for conducting a reaction between a substance and a fluid medium uses a reactor device according to the invention, wherein a substance is arranged in each vessel and wherein a fluid medium is passed through each vessels so that the respective fluid medium contacts the respective substance, wherein particularly the respective substance comprises a catalyst or is formed by a catalyst.

Particularly, for arranging the substance in the respective vessel, the first or second manifold is moved into the service position, the substance is arranged in the respective vessel and the manifold is moved into its operating position such that all vessels are sealed by their respective first (or second) seal at the same time upon moving the first (or second) manifold in its operating position, wherein particularly the first (or second) end sections of each vessel are inserted at the same time into the associated first (or second) recess.

Particularly, the vessels are operated in parallel, i.e., fluid medium is continuously passed through all vessels at the same time.

Further features and advantages of the invention shall be described by means of detailed descriptions of embodiments with reference to the Figures, wherein
- Fig. 1: shows a schematic, cross sectional view of a reactor device according to the invention;
- Fig. 2: shows a further schematic, in parts cross sectional view of a device according to the invention having a guiding means for guiding a movement of an upper first manifold of the reactor device away and towards a lower second manifold of the reactor device;
- Fig. 3: shows a detailed view of a first or second seal of a reactor device according to the invention which may be part of an assembly removable from the respective manifold of the reactor device but may also be integrally formed with the respective manifold;
- Fig.4: shows a cross sectional view of an alternative second (lower) removable assembly;
- Fig. 5: shows a cross sectional view of an alternative first (upper) removable assembly;
- Fig. 6: shows a perspective view of a fixing means for preventing the removable second (lowe) assemblies from being pulled out the second (lower) manifold;
- Fig. 7: a perspective view of a further embodiment according to the invention that is particularly suitable for higher pressures inside the vessels; and
- Fig. 8: shows a detail of the reactor device shown in Fig. 7.

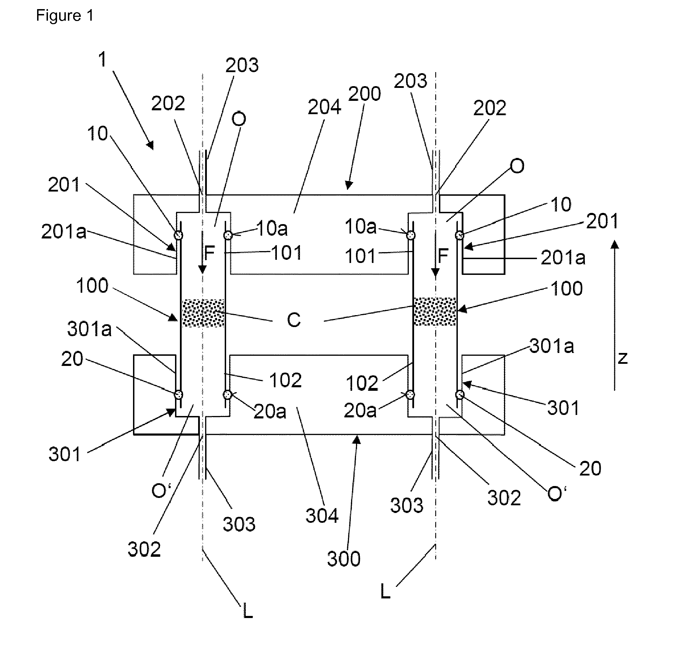

Figure 1 shows a reactor device 1 according to the invention. The reactor device comprises at least two tubular vessels (also denoted as reaction tubes) 100 which serve for receiving a substance C (e.g. catalyst) that is to be tested. The vessels 100 each extend along a longitudinal axis L running parallel to the vertical direction z. Each vessel 100 comprises a first (upper) end section 101 delimiting an opening (inlet) O as well as an opposing second (lower) end section 102 also delimiting an opening (outlet) O', so that a fluid medium F which may be a liquid and/or gaseous phase can be passed through the vessel 100 by feeding it into the inlet O and drawing it off from the outlet O'. In case said substance C is or contains a catalyst to be tested, the fluid medium (feed) F may contain reactants, wherein the catalyst C serves for accelerating a specific reaction of said reactants.

For feeding fluid medium F into the vessels 100 and for holding the latter in place the reactor device 1 comprises a first (upper) plate-shaped manifold 200 which extends perpendicular with respect to the longitudinal axes L of the vessels in a horizontal plane and comprises a separate first (upper) recess 201 for each first end section 101 of the vessels 100. In an operating position of the first manifold 200, the first end sections 101 of the vessels 100 are inserted into the associated first recesses 201.

In order to seal a circular gap between each first end section 101 of the respective vessel 100 and a circumferential inner side 201 a of the respective recess 201 a first seal 10 in the form of an O-ring seal 10 is provided that tightly encompasses the first end section 101 of the respective vessel 100, wherein the first seals 10 further butt with an outer side 10a against the circumferential inner side 200a of the associated first recess 201. Thus, the first seals 10 are arranged inside their associated first recesses 201 and provide for a radial sealing of the vessels 100.

Further, the first manifold 200 comprises a first aperture 202 for each first recess 201 being in fluid communication with the respective first recess 201. Such that a fluid medium F can be fed via a conduit 203 connected to the respective first aperture 202 to the inlet O of the respective vessel 100 residing in its first recess.

Now, for discharging the fluid medium F out of the vessels through outlets O' and for holding them in place, the reactor device 1 further comprises a second (lower) plate-shaped manifold 300 which opposes the upper manifold 200 and runs parallel to the upper manifold 200. The second manifold 300 comprises a second recess 301 for each second end section 102 of the vessels 100, wherein the second recesses 301 are aligned with their associated first recesses 201 of the first manifold 200. The second end sections 102 of the vessels 100 are inserted each into an associated second recess 301 and sealed by means of a second seal 20, respectively, as described above, i.e., each second seals 20 tightly encompasses the second end section 102 of its associated vessel 100, while its outer side 20a butts against a circumferential inner side 301 a of the respective second recess 301.

Further, the second manifold 200 comprises a second aperture 302 for each second recess 301 being in fluid communication with the respective second recess 301, such that the fluid medium F can be discharged out of the respective vessel 100 via its outlet O' and a conduit 303 connected to the respective second aperture 202.

Preferably, the first and second annular shaped (O-ring) seals 10, 20 are made out of an elastic, e.g. elastomeric, material, such that they seal when exposed to a pressure gradient since the first and second seals 10, 20 are then deformed such that they reduce in diameter along the longitudinal axes L and thus press against the respective vessel 100 and inner side 201 a, 301 a yielding a seal effect. Further, the seals 10, 20 can be arranged in circumferential grooves formed in said inner sides 201 a, 301 a of the respective recess 201, 301.

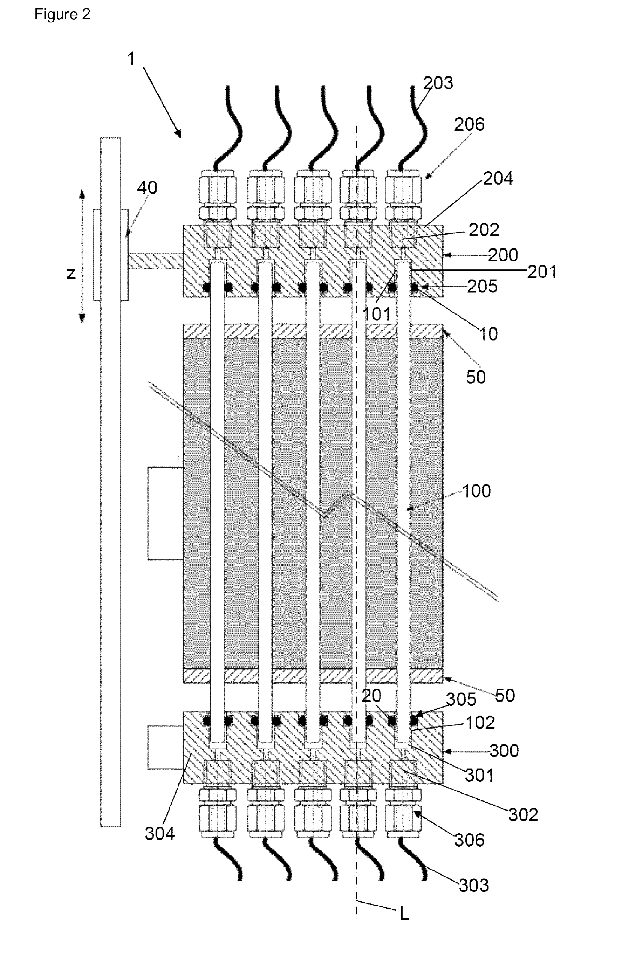

Fig. 2 shows a further device according to the invention having a plurality of vessels 100 as well as first and second manifold 200, 300, wherein the vessels 100 are sealed by first and second seals 10, 20 with respect as described with reference to Fig. 1. Here, the conduits 203, 303 for feeding fluid medium F into and for discharging it out of the vessels 100 are connected to their associated apertures 202, 302 by means of connectors 206, 306 that engage with said apertures 202, 302.

Further, in order to be able to move the upper first manifold 200 away from the first end sections 101 of the vessels 100 towards a service position, so as to disengage the vessels from the first recesses as well as in order to move back the first manifold 200 in its operating position in which the first end sections 100 are (simultaneously) inserted into the first recesses and engage with the first seals 10 being arranged in said circumferential grooves 205 formed in the first recesses 201 (the second seals 20 are arranged in such grooves 305 as well) the reactor device 1 comprises a guiding means 40 that is designed for guiding said movement back and forth along the vertical z. In the operating position, the first manifold 200 can be properly fixed so that the first manifold 200 withstands the force acting on it when the pressure inside the vessels 100 due to the fluid medium F exceeds the external pressure. The lower second manifold 300 is fixed so that it remains stationary.

As can be seen from Figs. 1 and 2, the vessels 100 protrude out of the recesses 201, 301, such that the two manifolds 200, 300 are spaced apart along the longitudinal axes L. Further, as indicated in Fig. 2, the vessels 100 are surrounded at least in sections by a thermal insulation 50 for thermally insulating the vessels 100.

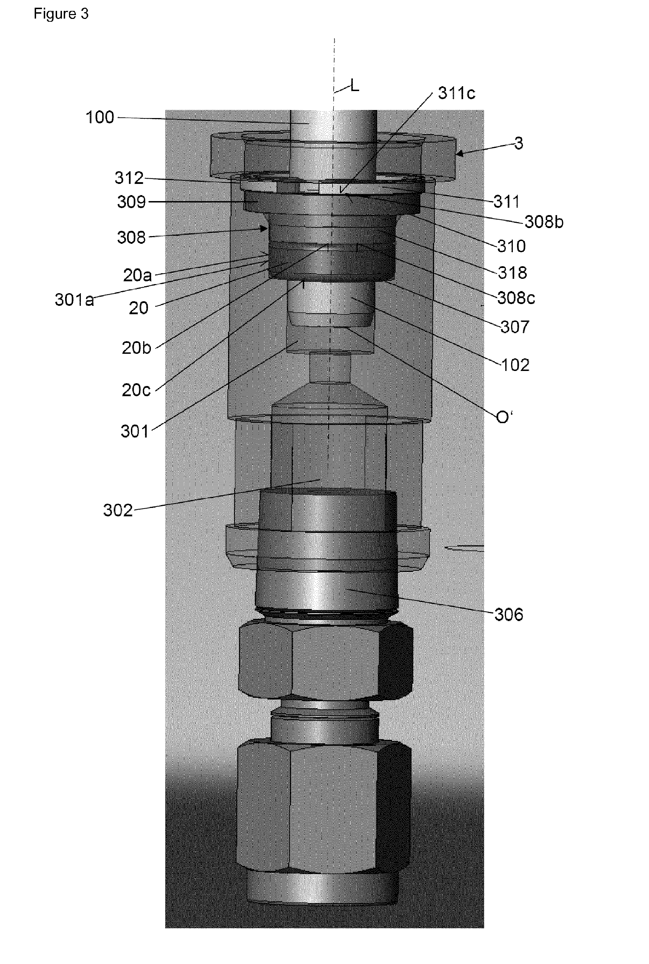

The first and second recesses 201, 301 as shown in Fig. 1 and 2 can be integrally formed with the manifold, e.g., by milling them into the manifolds 200, 300. Alternatively, as shown in Fig. 3 the first and second recesses 201, 301 can be formed in separate first and second assemblies that particularly comprise first and second sleeves 2, 3 that are inserted into associated clearances of plate-shaped base bodies 204, 304 of the manifolds 200, 300 and fastened to said base bodies 204, 304 in a releasable manner (non-destructively).

According to Fig. 3 each second recess 301 is delimited by the associated second sleeve 3 and is in fluid communication with its associated first aperture 302 to which a connector 306 of a conduit 303 (cf. Fig. 2) is coupled. Since the outlet O' of vessel 100 is arranged in the first recess 301 and opposes first aperture 302 fluid medium F can be drawn off the vessel 100 via connector 306 and a conduit 303 connected thereto.

As indicated in Fig. 3 the second end section 102 of vessel 100 which is arranged inside the second recess 301 is encompassed by a second seal 20 (e.g. O-ring seal) that comprises an outer side 20a that butts against a circumferential inner side 301 a of second recess 301 which faces said second seal 20. Further, the second seal 20 rests with a lower side 20c on a circumferential step 307 formed in the second recess 301. Thus, the gap between the second end section 102 of the vessel 100 and said inner side 301 a can be sealed by second seal 20.

In order to protect the second seal 20 a second support ring 308 is arranged adjacent to first seal 10 so that a lower side 308c of second support ring 308 rests on an upper side 20b of second seal 20, which upper side 20b faces away from the lower side 20c of the second seal 20. Further, the second support ring 308 comprises a circumferential flange 309 protruding radially from a base 318 of the second support ring 308, which flange 309 rests on a further circumferential step 310 formed in the second recess 301.

In order to fix the second seal 20 as well as the second support ring 308 on their respective steps 307, 310 a clamping element 311 in the form of a C-ring is arranged in a circumferential groove 312 of the second recess 301 such that a lower side 311 c of the clamping element 311 facing the second support ring 308 rests on an upper side 308b of the second support ring 308 (flange 309). Thus, a movement of the second seal 20 and its second support ring 308 out of the second recess 301 (along the longitudinal axis L of the vessel 100) is prevented.

The first assemblies (sleeves) 2 are particularly designed identical regarding the above-described features of Fig. 3, i.e., comprise the first recesses 201, in which the first seals 10, first support rings and first clamping elements (e.g. C-rings) are arranged as described above with respect to the second seals 20. However, conduits 203 now serve for feeding fluid medium F into the vessels 100.

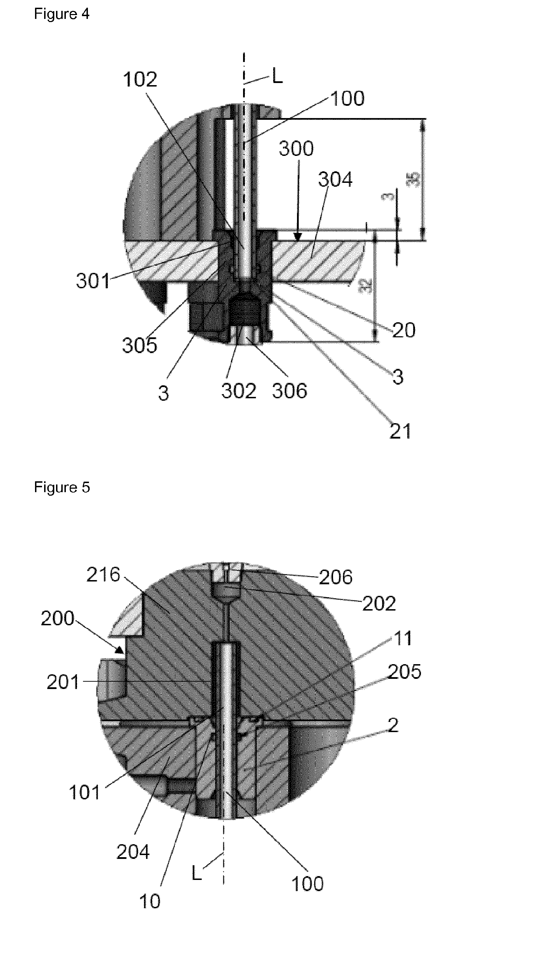

Fig. 4 shows a view of an alternative removable second assembly comprising a sleeve 3 that can be inserted into a corresponding clearance of a base plate 304 of a second (lower) manifold 300. The sleeve 3 delimits the second recess 301 which comprises the second seal 20 arranged in a circumferential groove 305 formed in the second recess 301. The second seal encompasses the second end section 102 of vessel 100 and thus seals the gap between the second recess 301 and the second end section 102 of vessel 100. Further, the vessel 100 is in fluid communication with a second aperture 302 of the second manifold 300, which second aperture 302 is formed in said sleeve 3. A connector 306 of a conduit (not shown) is connected to said second aperture 302 for drawing off fluid medium F from the vessel 100. Finally, a gap between a face side of the second end section 102 of the vessel 100 and a circumferential step of the second recess 301 is sealed by another O-ring seal 21.

Fig. 5 shows another variant of a removable first assembly containing a first seal 10 arranged in a circumferential groove 205 formed in a first sleeve 2 of said first assembly. Said sleeve 3 is mounted in clearance of a base plate 204 of a first manifold which further comprises a separate gas distributor 216 fastened to said base plate 204. Here, the first recess 201 also extends into said gas distributor 216 which comprises the first aperture 202 being in fluid communication with the first end section 101 of vessel 100.

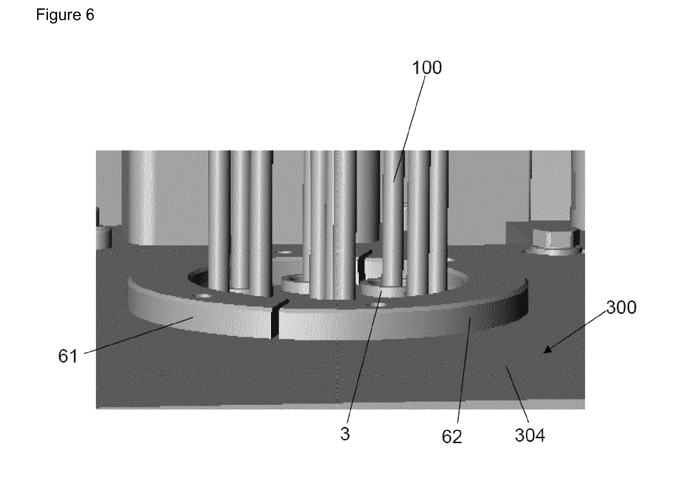

In order to fix said removable first and second assemblies with respect to the respective base plate 204, 304 of the first or second manifold 200, 300 a fixing means 61, 62 may be provided according to Fig. 6, which comprises two semi-annular rings 61, 62 that extend at least partially over the second sleeves 3 inserted into the second (lower) base plate 304 of second (lower) manifold 300, so that the sleeves 3 cannot be pulled out of the second base plate 304.

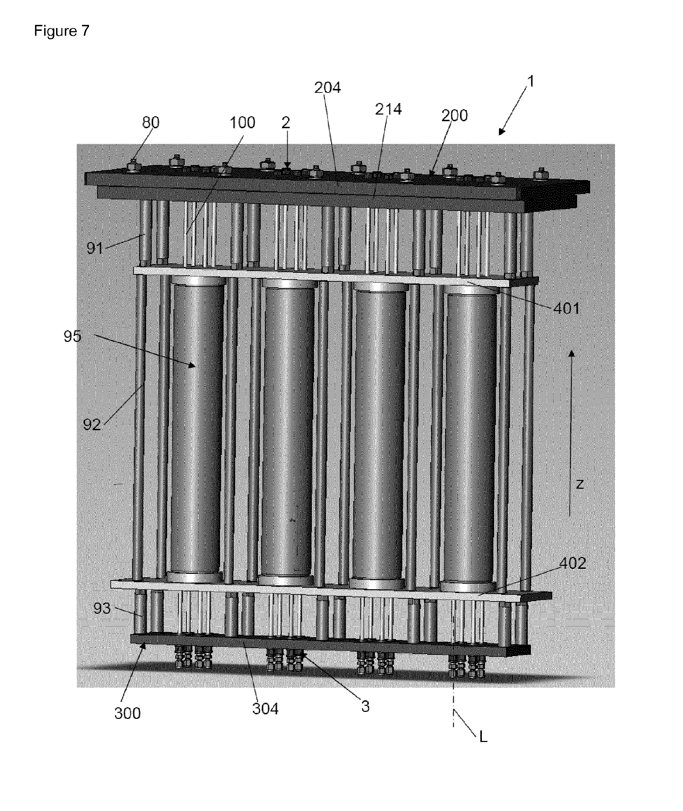

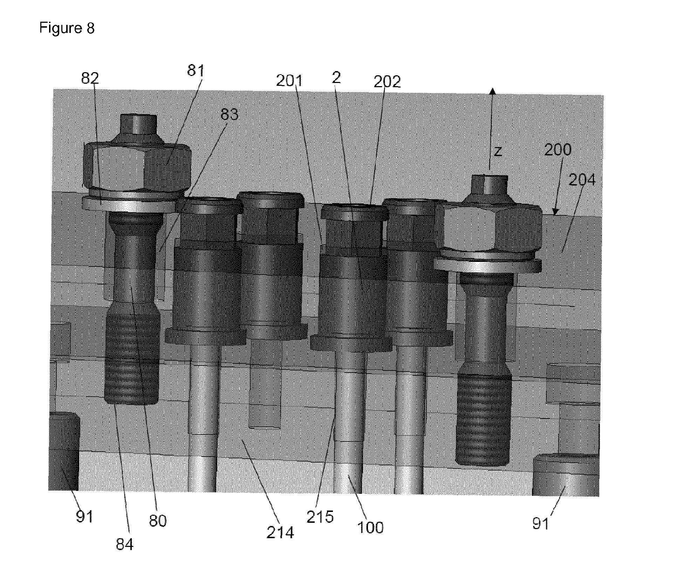

Finally, Fig. 7 shows in conjunction with Fig. 8 an embodiment which is especially suited for high-pressure applications.

Here, the upper first and lower second manifold 200, 300 are connected by tension rods 91, 92, 93, which absorb the forces pushing the manifolds 200, 300 apart when the vessels 100 running parallel to said rods 91, 92, 93 are under pressure. Particularly, the two manifolds 200, 300 are connected to each other via a first (upper) and a second (lower) carrier plate 401, 402 running parallel with respect to each other and being designed to support a heating devices 95 for heating the vessels 100 which are grouped in four groups of vessels 100 each group comprising four vessels 100. These carrier plates 401, 402 are arranged between the two manifolds 200, 300 (with respect to the longitudinal axes L of the vessels 100 or vertical z).

In detail, the first manifold 200 is connected to the first carrier plate 401 by means of a plurality of first tension rods 91 each extending parallel to the longitudinal axes L of the vessels 100, while the first carrier plate 401 is connected to the second carrier plate 402 via a plurality of second tension rods 92 extending parallel to the longitudinal axes L of the vessels 100 as well. The second carrier plate 402 in turn is connected to the second manifold via a plurality of third tension rods 93 each aligning with one of the first tension rods 91.

While the second (lower) manifold comprises only a single base plate 304 extending along a horizontal extension plane (i.e. perpendicular to the longitudinal axes L of the vessels 100), in which base plate 204 preferably removable assemblies 3 according to Fig.3 are inserted, the first (upper) manifold 200 comprises a first upper base plate 204 and a lower second base plate 214 (being closer to the carrier plates 401, 402 than the upper base plate 204), wherein the base plates 204, 214 extend parallel to each other along a horizontal extension plane (i.e. perpendicular to the longitudinal axes L of the vessels 100) and are connected to each other by stress bolts 80 which are anchored with a first free end in the second base plate 214 from which they extend through the first base plate from which they protrude with an opposing second free end which engages with a nut 81 which - when tightened - presses against the first base plate 204 via a washer 82 and thus tightly connects the first base plate 204 to the second base plate 214 of the first manifold 200. The first sleeves (first assemblies) 2, which are preferably designed according to Fig. 3, are inserted into the first base plate 204, wherein the vessels 100 extend from the first sleeves 2 through associated through-openings 215 of the second base plate 214 towards the lower second manifold 300.

## Claims

1. Reactor device, comprising:
- at least one vessel (100) having a first end section (101) and an opposing second end section (102), wherein the two end sections (101, 102) each delimit an opening (O, O') of the at least one vessel (100), so that a fluid medium (F) can enter the at least one vessel (100) through one of the openings (O), flow through the at least one vessel (100), and leave the at least one vessel (100) through the other opening (O'), and
- a first manifold (200) comprising a first recess (201) and a first aperture (202), wherein the first end section (101) of the at least one vessel (100) is designed to be arranged in said first recess (201) in an operating position of the first manifold (200), so that the opening (O) delimited by the first end section (101) of the vessel (100) is in fluid communication with said first aperture (202) and fluid medium (F) can be discharged into the vessel (100) or can be drawn off the vessel (100) through said first aperture (202) of the first manifold (200),
**characterized in that**
the reactor device (1) comprises a first seal (10) for sealing a gap between the first end section (101) of the at least one vessel (100) and a circumferential inner side (201 a) of the first recess (201) in the operating position of the first manifold (200), wherein the first seal (10) encompasses the first end section (101) of the at least one vessel (100) and rests with an outer side (10a) against said inner side (201 a) of the first recess (201) of the first manifold (200).

2. Reactor device according to claim 1, **characterized in that** the reactor device (1) comprises a second manifold (300) opposing the first manifold (200), wherein particularly the second end section (102) of the at least one vessel (100) is connected to the second manifold (300) via a sealing element (20) which provides a direct seal effect between the second manifold (300) and the second end section (102) of the vessel (100).

3. Reactor device according to claim 2, **characterized in that** the second manifold (300) comprises a second recess (301) and a second aperture (302), wherein the second end section (102) of the at least one vessel (100) is designed to be arranged in said second recess (301) in an operating position of the second manifold (300), so that the opening (O') delimited by the second end section (102) of the vessel (100) is in fluid communication with said second aperture (302) and fluid medium (F) can be discharged into the vessel (100) or can be drawn off the vessel (100) through said second aperture (302) of the second manifold (300), wherein the reactor device (1) comprises a second seal (20) for sealing a gap between the second end section (102) of the at least one vessel (100) and a circumferential inner side (301 a) of the second recess (301) in the operating position of the second manifold (300), wherein the second seal (20) encompasses the second end section (102) of the at least one vessel (100) and rests with an outer side (20a) against said inner side (301 a) of the second recess (102) of the second manifold (300).

4. Reactor device according to one of the preceding claims, **characterized in that** the reactor device (1) comprises a plurality of vessels (100) each having a first end section (101) and an opposing second end section (102), wherein the two end sections (101, 102) of the respective vessel (100) each delimit an opening (O, O') of the respective vessel (100), so that a fluid medium (F) can enter the respective vessel (100) through one of the openings (O), flow through the respective vessel (100), and leave the respective vessel (100) through the other opening (O'),
wherein particularly the first manifold (200) comprises a plurality of first recesses (201) and a plurality of first apertures (202), wherein each first recess (201) is associated to a different vessel (100), and wherein the first end section (101) of each vessel (100) is designed to be arranged in its associated first recess (201) in an operating position of the first manifold (200), so that each of said openings (O) delimited by a first end section (101) of a vessel (100) is in fluid communication with an associated first aperture (202) and fluid medium (F) can be discharged into the respective vessel (100) or can be drawn off the respective vessel (100) through the respective first aperture (202) of the first manifold (200),
and wherein particularly the reactor device (1) comprises a plurality of first seals (10), wherein each first seal (10) is associated to a different vessel (100) and serves for sealing a gap between the first end section (101) of the respective vessel (100) and a circumferential inner side (201 a) of the first recess (201) associated to the respective vessel (100) in the operating position of the first manifold (200), wherein each first seal (10) encompasses the first end section (101) of its associated vessel (100) and rests with an outer side (10a) against said inner side (201 a) of the respective first recess (201),
and wherein particularly the second end section (102) of each vessel (100) is connected to the second manifold (300) via a sealing element (20), respectively, wherein the sealing elements (20) each provide a direct seal effect between the second manifold (300) and the second end section (102) of the respective vessel (100),
and wherein particularly the second manifold (300) comprises a plurality of second recesses (301) and a plurality of second apertures (302), wherein each second recess (301) is associated to a different vessel (100), and wherein the second end section (102) of each vessel (100) is designed to be arranged in its associated second recess (301) in an operating position of the second manifold (300), so that each of said openings (O') delimited by a second end section (102) of a vessel (100) is in fluid communication with an associated second aperture (302) and fluid medium (F) can be discharged into the respective vessel (100) or can be drawn off the respective vessel (100) through the respective second aperture (302) of the second manifold (300),
and wherein particularly the reactor device (1) comprises a plurality of second seals (20), wherein each second seal (20) is associated to a different vessel (100) and serves for sealing a gap between the second end section (102) of the respective vessel (100) and a circumferential inner side (301a) of the second recess (301) associated to the respective vessel (100) in the operating position of the second manifold (300), wherein each second seal (20) encompasses the second end section (102) of its associated vessel (100) and rests with an outer side (20a) against said inner side (301 a) of the respective second recess (301).

5. Reactor device according to one of the preceding claims, **characterized in that** the first manifold (200) is designed to be movable from its operating position into a service position in which the first end sections (101) of the vessels (100) are arranged outside the first recesses (201), or the second manifold (300) is designed to be movable from its operating position into a service position in which the second end sections (102) of the vessels (100) are arranged outside the second recesses (301), wherein particularly the reactor device (1) comprises a movement generating means being designed to move the first manifold (200) or the second manifold (300) from the respective operating position to the respective service position, and wherein particularly the reactor device (1) comprises a guiding means (40) being designed to guide a movement of the first or the second manifold (200, 300) from the respective operating position to the respective service position.

6. Reactor device according to one of the preceding claims, **characterized in that** the first and/or second seals (10, 20) are designed out of an elastomeric material, wherein particularly the first and/or second seals (10, 20) are designed such that they seal automatically, particularly when exposed to a pressure gradient.

7. Reactor device according to one of the preceding claims, **characterized in that** each first recess (201) comprises a circumferential step on which the respective first seal (10) rests, and/or each second recess (301) comprises a circumferential step (307) on which the respective second seal (20) rests.

8. Reactor device according to claim 7, **characterized in that** a first support ring is provided for each first seal (10), wherein the first support rings each butt against a side of the respective first seal (10) facing away from the circumferential step of the respective first recess (201), wherein particularly each first support ring comprises a circumferential flange resting on a further circumferential step of the respective first recess (201), and/or
a second support ring (308) is provided for each second seal (20), wherein the second support rings (308) each butt against a side of the respective second seal (20) facing away from the circumferential step of the respective second recess (301), wherein particularly each second support ring (308) comprises a circumferential flange (309) resting on a further circumferential step (310) of the respective second recess (301).

9. Reactor device according to claim 7 or 8, **characterized in that** a first clamping element, particularly in the form of a first C-ring, is provided for each first seal (10) for fixing the respective first seal (10) and/or first support ring in the respective first recess (201), wherein particularly each first clamping element engages with an associated circumferential groove of the respective first recess (201), and/or
a second clamping element (311), particularly in the form of a second C-ring, is provided for each second seal (20) for fixing the respective second seal (20) and/or second support ring (308) in the respective second recess (301), wherein particularly each second clamping element (311) engages with an associated circumferential groove (312) of the respective second recess (301).

10. Reactor device according to one of the claims 1 to 6, **characterized in that** each first recess (201) comprises a circumferential groove (205) for receiving the respective first seal (20), and/or
each second recess (301) comprises a circumferential groove (305) for receiving the respective second seal (20).

11. Reactor device according to one of the preceding claims, **characterized in that** each first recess (201) of the first manifold (200) is at least partially formed in a separate first assembly, wherein the first assemblies are releasably connected to a first base plate (204) of the first manifold (200), wherein particularly the reactor device (1) comprises a first fixing means being fastened to the first base plate (204) so as to prevent the first assemblies from being pulled out of the first base plate (204), particularly when the second manifold (300) is removed from the vessels (100), and/or
each second recess (301) of the second manifold (300) is at least partially formed in a separate second assembly, wherein the second assemblies are releasably connected to a second base plate (304) of the second manifold (300), wherein particularly the reactor device (1) comprises a second fixing means (61, 62) being fastened to the second base plate (304) so as to prevent the second assemblies from being pulled out of the second base plate (304), particularly when the first manifold (200) is removed from the vessels (100).

12. Reactor device according to one of the preceding claims, **characterized in that** the first and the second manifolds (200, 300) are releasably connected by tension rods (91, 92, 93), wherein particularly the first manifold (200) comprises a first base plate (204) and a second base plate (214) running parallel with respect to each other and being connected to each other, particularly by a plurality of stress bolts (80), wherein particularly the tension rods (91) connecting to the first manifold (200) are connected to the second base plate (214), while the first assemblies are inserted into the first base plate (204).

13. Reactor device according to claim 12, **characterized in that** the two manifolds (200, 300) are connected to each other via a first and a second carrier plate (401, 402) running parallel with respect to each other and being designed to support at least one heating device (95) for heating vessels (100).

14. Method for conducting a reaction between a substance and a fluid medium using a reactor device (1) according to one of the preceding claims, wherein a substance is arranged in each vessel (100), and wherein a fluid medium (F) is passed through each vessel (100) for contacting the respective substance, wherein particularly the substances comprise a catalyst or are formed by a catalyst.
